# EUROPEAN PATENT APPLICATION

(11) **EP 4 757 211 A1**
(43) Date of publication of application: **10.06.2026**
(21) Application number: 23948363.9
(22) Date of filing: 04.08.2023
(51) Int. Cl.: H04J 1/05, G06N 10/20

(54) **CONTROL DEVICE AND CONTROL METHOD**

(71) Applicant: FUJITSU LIMITED, Kawasaki-shi, Kanagawa 211-8588 (JP)
(72) Inventor: KAWASHITA, Mitsuya, Kawasaki-shi, Kanagawa 211-8588 (JP)
(74) Representative: Haseltine Lake Kempner LLP
(86) International application number: PCT/JP2023/028581
(87) International publication number: WO 2025/032642

(57) **Abstract**

Reduction in circuit implementation scale is achieved.

A control apparatus (10) includes a digital processing circuit (10a) and a digital-to-analog converter (DAC) (30). The digital processing circuit (10a) generates a control command group (g1) including a plurality of first control commands for controlling a plurality of first qubits, and a control command group (g2) including a plurality of second control commands for controlling a plurality of second qubits, each of the second control commands having the same frequency as that of a corresponding one of the first control commands. In addition, the digital processing circuit (10a) performs frequency-multiplexing on control command groups (g11, g12) of different frequency bands by adding offsets to the control command groups (g1, g2), to generate a digital multiplexed signal (dm1). The DAC (30) performs digital-to-analog conversion on the digital multiplexed signal (dm1), to generate an analog multiplexed signal (am1).

## Description

### Technical Field

The present invention relates to a control apparatus and a control method for a quantum computer.

### Background Art

A control apparatus for a quantum computer has a function of controlling qubit operations with microwave control signals and reading out operation results from qubit states with microwaves.

As a related technique, for example, a technique of reducing the number of input lines by coupling a diplexer to a qubit signal distribution device and a readout signal distribution device has been proposed. In addition, a technique of controlling a quantum processor by providing a plurality of digital-to-analog converters has been proposed. Further, there has been proposed a technique of simultaneously controlling amplitudes and phases of pulses of different frequencies in accordance with a state change of a qubit coupled to a transmission line. Further, there has been proposed a technique of realizing interaction between qubit circuits by using a plurality of superconducting qubit circuits to which signals of the same frequency are supplied.

### Citation List

### Patent Literature

PTL1: Japanese National Publication of International Patent Application No. 2020-537396
PTL2: Japanese National Publication of International Patent Application No. 2022-536594
PTL3: U.S. Patent Application Publication No. 2018/0013426
PTL4: International Publication Pamphlet No. WO 2021/014889

### Summary of Invention

### Technical Problem

In a control apparatus, a plurality of control signals in the same frequency band are generated based on a command instructed from a host personal computer (PC), and a digital-to-analog converter (DAC) that performs digital-to-analog conversion is used to generate a control signal.

However, when a plurality of control signals in the same frequency band are generated, conventionally, the same number of DACs as the number of control signals to be generated are implemented, and each DAC needs a system for generating an analog control signal from a digital command. Thus, the conventional technology has a problem in that the circuit implementation scale increases as the qubit operation scale increases.

In one aspect, an object of the present disclosure is to provide a control apparatus and a control method that achieve reduction in circuit implementation scale.

### Solution to Problem

In order to solve the above problem, a control apparatus is provided. The control apparatus includes: a digital processing circuit that generates a first control command group including a plurality of first control commands for controlling a plurality of first qubits, and a second control command group including a plurality of second control commands for controlling a plurality of second qubits, each of the second control commands having a same frequency as a frequency of a corresponding one of the first control commands, and performs frequency-multiplexing on a third control command group having a first frequency band obtained by adding a first offset to a frequency band of the first control command group and a fourth control command group having a second frequency band, which is obtained by adding a second offset to a frequency band of the second control command group and which is different from the first frequency band, to generate a digital multiplexed signal; and a digital-to-analog converter for performing digital-to-analog conversion on the digital multiplexed signal, to generate an analog multiplexed signal.

Further, in order to solve the above problem, there is provided a control method for executing the same control as that of the above control apparatus.

### Advantageous Effects of Invention

According to one aspect, reduction in circuit implementation scale is achieved.

The above and other objects, features and advantages of the present disclosure will become apparent from the accompanying drawings and the following description related thereto which illustrate suitable embodiments as examples of the disclosure.

### Brief Description of Drawings

FIG. 1 illustrates an example of a control apparatus.
FIG. 2 illustrates an example of generation of control signals.
FIG. 3 illustrates an example of processing of readout signals.
FIG. 4 illustrates an example of control by cross-resonance of a quantum computer.
FIG. 5 illustrates an example frequency band of control signals.
FIG. 6 illustrates an example of control of readout from the quantum computer.
FIG. 7 illustrates an example frequency band of the readout signals.
FIG. 8 illustrates a configuration example of the control apparatus.
FIG. 9 illustrates a configuration example of the control apparatus.
FIG. 10 illustrates an example of an operation of generating control signals and processing readout signals.
FIG. 11 illustrates the example of the operation of generating the control signals and processing the readout signals.
FIG. 12 illustrates an example of frequency conversion and frequency multiplexing.
FIG. 13 illustrates an example of extraction and up-conversion of control command signals.
FIG. 14 illustrates an example of down-conversion and combining of the readout signals.
FIG. 15 illustrates an example of frequency deviation detection of the resonance frequency of an individual control command.
FIG. 16 illustrates an example of frequency deviation correction of the resonance frequency of an individual control command.
FIG. 17 illustrates an example of an up-conversion operation.
FIG. 18 illustrates an example of a down-conversion operation.
FIG. 19 illustrates a modification of the control apparatus.
FIG. 20 illustrates the modification of the control apparatus.

### Description of Embodiments

Hereinafter, an embodiment will be described with reference to the drawings.

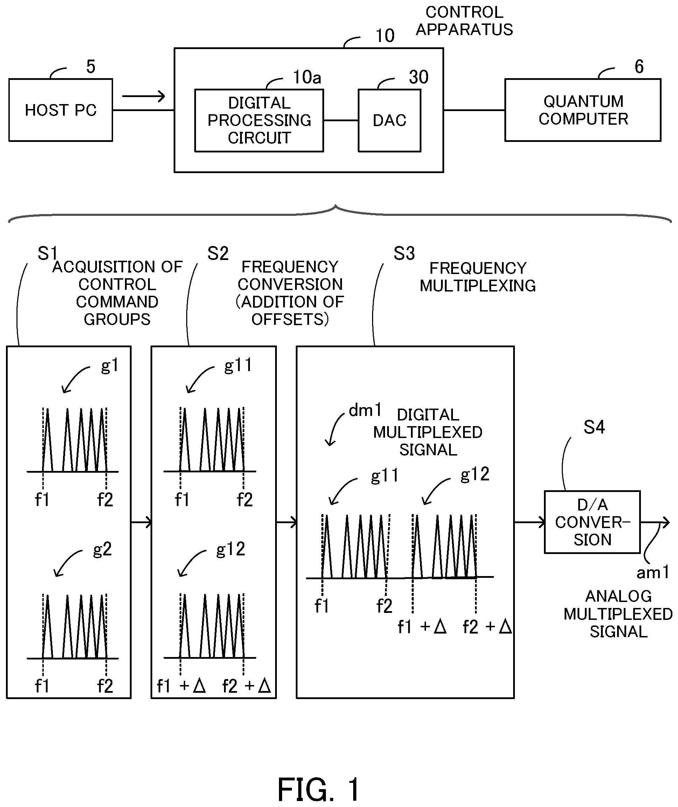

FIG. 1 illustrates an example of a control apparatus. This control apparatus 10 is connected to a host personal computer (PC) 5 and a quantum computer 6, and includes a digital processing circuit 10a that processes digital signals, and a digital-to-analog converter (DAC) 30.

[Step S1] The digital processing circuit 10a acquires a control command group g1 (first control command group) and a control command group g2 (second control command group) based on a control instruction from the host PC 5.

The control command group g1 includes a plurality of first control commands for controlling a plurality of first qubits of the quantum computer 6. The control command group g2 includes a plurality of second control commands for controlling a plurality of second qubits of the quantum computer 6, each of the second control commands having the same frequency as that of a corresponding one of the first control commands.

In the example of FIG. 1, each of the control command groups g1 and g2 includes 5-qubit control commands in the frequency band from a frequency f1 to a frequency f2 (from f1 to f2). In the following description, the frequency band from a frequency fa to a frequency fb may be referred to as (fa - fb).

[Step S2] The digital processing circuit 10a generates a control command group g11 (third control command group) by performing frequency conversion in which a first offset is added to the frequency band (f1 - f2) of the control command group g1 such that the frequency band is converted into a first frequency band. In the example of FIG. 1, the first offset is 0, and the first frequency band of the control command group g11 is the frequency band (f1 - f2). When the offset is 0, the first control command group may be used as the third control command group without executing the frequency conversion process.

In addition, the digital processing circuit 10a performs frequency conversion in which a second offset is added to the frequency band (f1 - f2) of the control command group g2 such that the frequency band is converted into a second frequency band (f1+Δ - f2+Δ), which is different from the first frequency band (f1 - f2), and acquires a control command group g12 (fourth control command group).

[Step S3] The digital processing circuit 10a performs frequency-multiplexing on the control command group g11 having the first frequency band (f1 - f2) and the control command group g12 having the second frequency band (f1+Δ - f2+Δ), to generate a digital multiplexed signal (dm1).

[Step S4] The DAC 30 performs digital-to-analog (D/A) conversion on the digital multiplexed signal dm1, to generate an analog multiplexed signal am1.

As described above, the control apparatus 10 adds frequency offsets to a plurality of control commands in the same frequency band, so as to convert these control command groups into control command groups in different frequency bands, and digitally multiplex these control command groups. The DAC 30 is used in common for generating a plurality of control signals in the same frequency band for controlling the qubits from the control commands.

In this way, when a plurality of control signals in the same frequency band are generated, a system for generating an analog control signal from a digital control command does not need to be implemented for each DAC. Therefore, because the circuit implementation scale of the control apparatus is reduced, the size of the control apparatus is reduced.

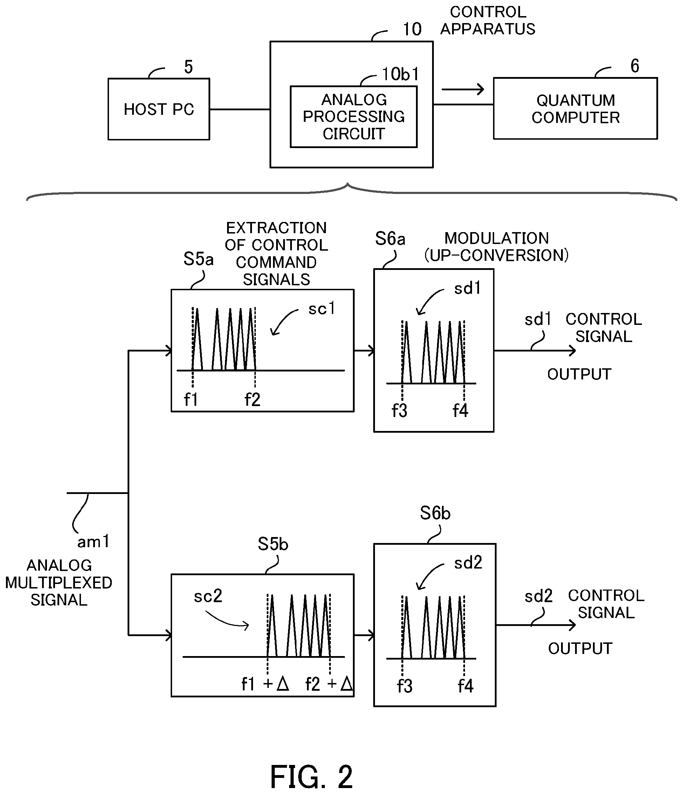

FIG. 2 illustrates an example of generation of control signals. The control apparatus 10 further includes an analog processing circuit 10b1 (first analog processing circuit) that processes analog signals.

[Step S5a] The analog processing circuit 10b1 extracts a control command signal sc1 (first control command signal) having the first frequency band (f1 - f2) from the analog multiplexed signal am1, which has been output from the DAC 30.

[Step S5b] The analog processing circuit 10b1 extracts a control command signal sc2 (second control command signal) having the second frequency band (f1+Δ - f2+Δ) from the analog multiplexed signal am1, which has been output from the DAC 30.

[Step S6a] The analog processing circuit 10b1 generates a control signal sd1 (first control signal) by modulating (up-converting) the first frequency band (f1 - f2) of the control command signal sc1 to a third frequency band (f3 - f4), and outputs the control signal sd1 to the quantum computer 6. The third frequency band (f3 - f4) is a microwave frequency band needed for quantum computation in the quantum computer 6.

[Step S6b] The analog processing circuit 10b1 generates a control signal sd2 (second control signal) by modulating the second frequency band (f1+Δ - f2+Δ) of the control command signal sc2 to the third frequency band (f3 - f4), and outputs the control signal sd2 to the quantum computer 6. In this manner, the control command signals sc1 and sc2 having the same third frequency band (f3 - f4) are output.

The control apparatus 10 including the analog processing circuit 10b1 as described above individually modulates the frequency bands of a plurality of control command signals extracted from a digital multiplexed signal to a frequency band needed for transmission of control signals to the quantum computer 6. This makes it possible to generate a plurality of control signals in the same frequency band.

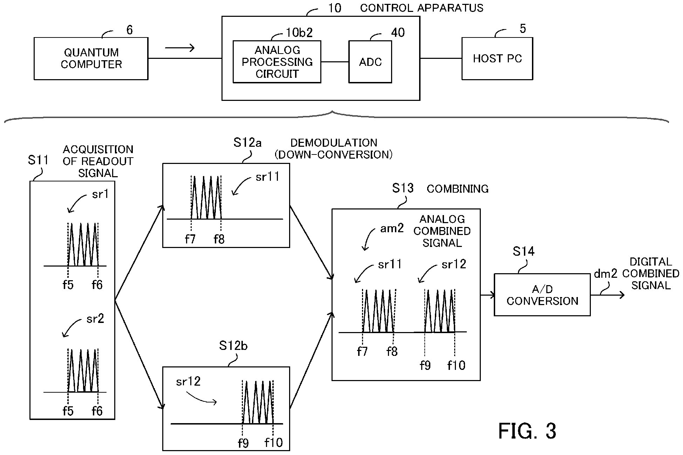

FIG. 3 illustrates an example of processing of readout signals. The control apparatus 10 further includes an analog processing circuit 10b2 (second analog processing circuit) that processes analog signals, and an analog-to-digital converter (ADC) 40.

[Step S11] The analog processing circuit 10b2 acquires a readout signal sr1 (first readout signal) having a fourth frequency band (f5 - f6) from a plurality of third qubits of the quantum computer 6.

In addition, the analog processing circuit 10b2 acquires a readout signal sr2 (second readout signal) having the fourth frequency band (f5 - f6) from a plurality of fourth qubits.

[Step S12a] The analog processing circuit 10b2 demodulates (down-converts) the fourth frequency band (f5 - f6) to a fifth frequency band (f7 - f8) to generate a readout signal sr11 (third readout signal).

[Step S12b] The analog processing circuit 10b2 demodulates the fourth frequency band (f5 - f6) to a sixth frequency band (f9 - f10), which is different from the fifth frequency band (f7 - f8), to generate a readout signal sr12 (fourth readout signal).

[Step S13] The analog processing circuit 10b2 combines the readout signal sr11 and the readout signal sr12, to generate an analog combined signal am2.

[Step S14] The ADC 40 performs analog-to-digital conversion on the analog signal am2, to generate a digital combined signal dm2.

In order for a conventional control apparatus to process readout signals in the same frequency band, which have been acquired from the quantum computer 6, the conventional control apparatus needs an ADC for each of the acquired readout signals. That is, the conventional control apparatus needs, for each ADC, a system for generating digital readout data to be returned to the host PC 5 from an analog readout signal. As a result, the circuit implementation scale is increased.

On the other hand, since the control apparatus 10 is provided with the analog processing circuit 10b2 and the ADC 40 as described above, the readout signals in the same frequency band are demodulated to different frequency bands, the frequency bands of the respective readout signals are changed to different frequency bands, and then the readout signals are combined. As a result, the ADC 40 is used in common for generating readout data.

Therefore, in the control apparatus 10, when readout data is generated, a system for generating digital readout data from an analog readout signal does not need to be implemented for each ADC. Therefore, because the circuit implementation scale of the control apparatus is reduced, the size of the control apparatus is reduced.

### <Control and Reading of Quantum Computer>

The control apparatus 10 controls quantum operations by transmitting control signals to qubits of the quantum computer 6. When controlling the qubits one by one, the control apparatus connects a control signal to each of the qubits. On the other hand, there is a technique called cross-resonance in which a plurality of qubits are controlled by one control signal by forming quantum logic gates.

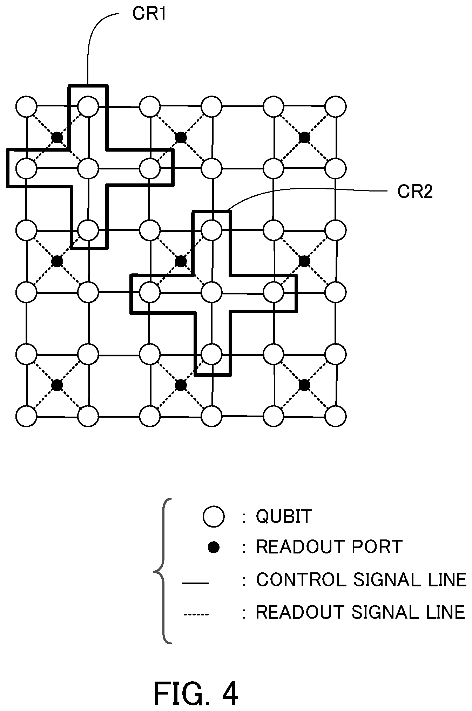

FIG. 4 illustrates an example of control by cross-resonance of the quantum computer. In FIG. 4, white circles indicate qubits, black circles indicate readout ports, thin solid lines indicate control signal lines, and dotted lines indicate readout signal lines.

FIG. 4 illustrates an example of a case where cross-resonance is performed with two sets of five qubits. In a cross-resonance CR1, a maximum of five qubits are controlled by one control signal, and in a cross-resonance CR2, a maximum of five qubits are controlled by one control signal.

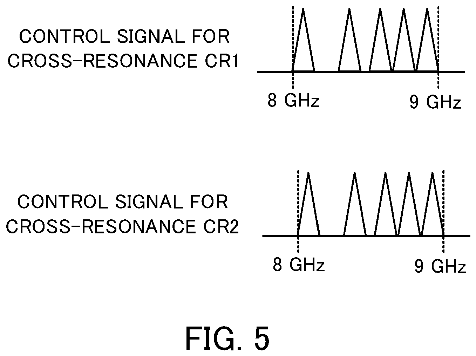

FIG. 5 illustrates an example frequency band of control signals. The control signals have the same frequency band at the time of cross-resonance. In this example, the frequency band of the control signal for the cross-resonance CR1 and the frequency band of the control signal for the cross-resonance CR2 are both a frequency band of 8 GHz to 9 GHz, and the control signal frequency (resonance frequency) for each qubit is included in this band.

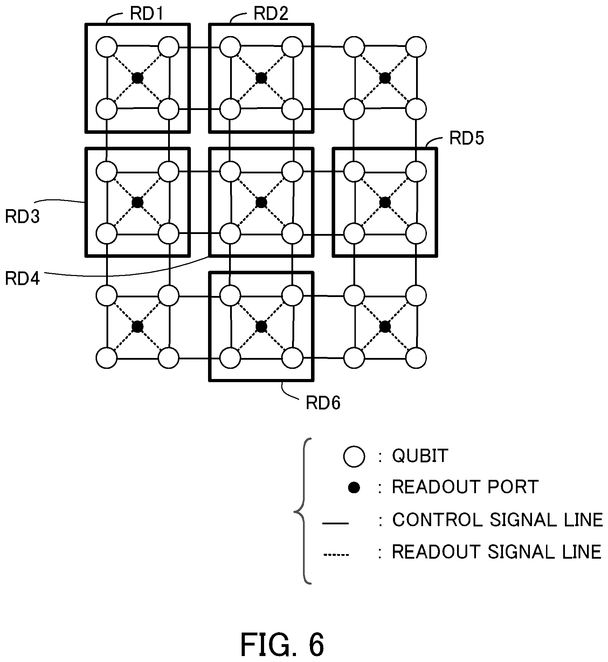

FIG. 6 illustrates an example of control of readout from the quantum computer. When a readout signal is read out from the quantum computer 6, the readout is performed with a combination of qubits different from that controlled by cross-resonance. In this example, readout is performed from six readout ranges RD1 to RD6, and four qubits are multiplexed and read out in each of the reading ranges RD1 to RD6.

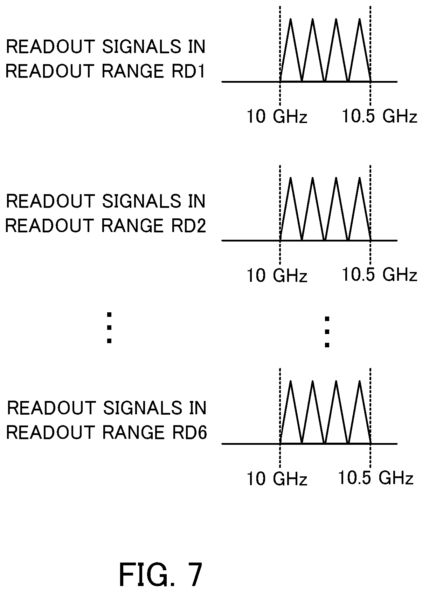

FIG. 7 illustrates an example frequency band of readout signals. The readout signals have the same frequency band. In this example, all the frequency bands of the readout signals in the readout ranges RD1 to RD6 are a band from 10 GHz to 10.5 GHz, and the frequencies of the readout signals in the qubit state are included in this band.

### <Configuration Example of Control Apparatus>

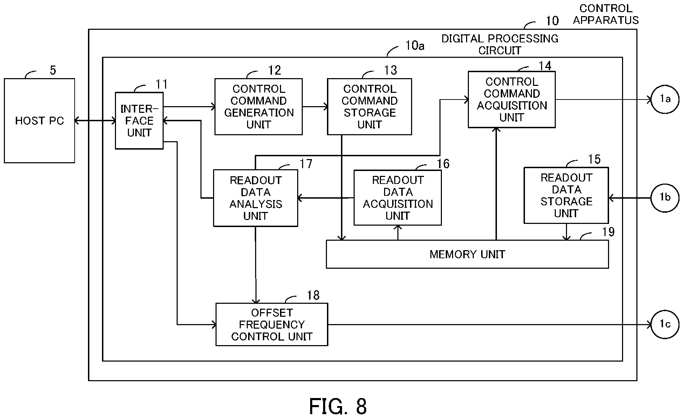

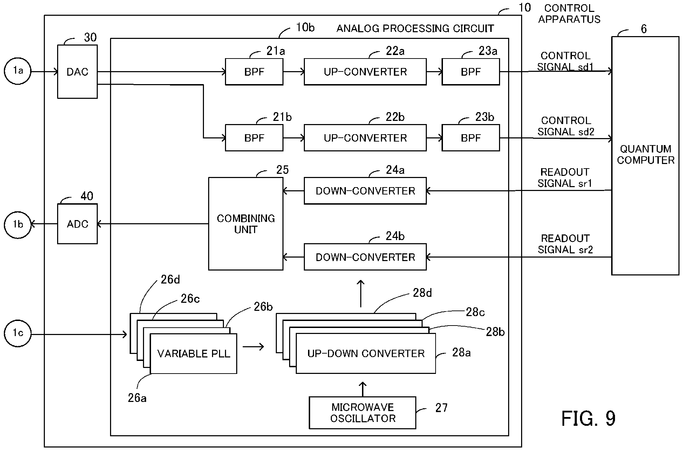

FIGS. 8 and 9 illustrate a configuration example of the control apparatus. The control apparatus 10 includes the digital processing circuit 10a, an analog processing circuit 10b, the DAC 30, and the ADC 40. The digital processing circuit 10a includes an interface unit 11, a control command generation unit 12, a control command storage unit 13, a control command acquisition unit 14, a readout data storage unit 15, a readout data acquisition unit 16, a readout data analysis unit 17, an offset frequency control unit 18, and a memory unit 19.

The analog processing circuit 10b has the functions of the analog processing circuits 10b1 and 10b2 illustrated in FIGS. 2 and 3, and includes band pass filters (BPFs) 21a and 21b, up-converters 22a and 22b, BPFs 23a and 23b, down-converters 24a and 24b, a combining unit 25, variable phase locked loops (PLLs) 26a, 26b, 26c, and 26d, a microwave oscillator 27, and up-down converters 28a, 28b, 28c, and 28d.

### <Flow of Operation of Generating Control Signals and Processing Readout Signals>

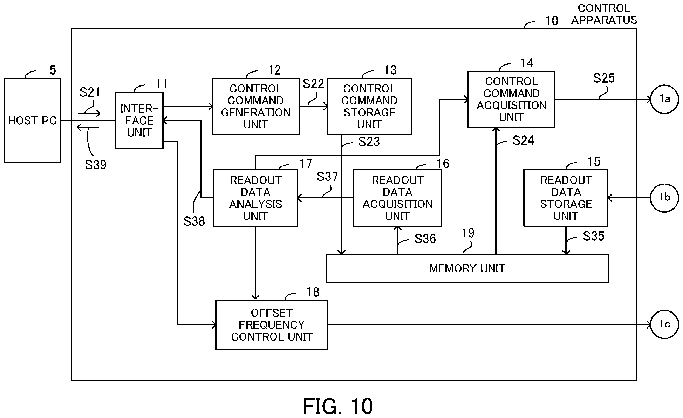

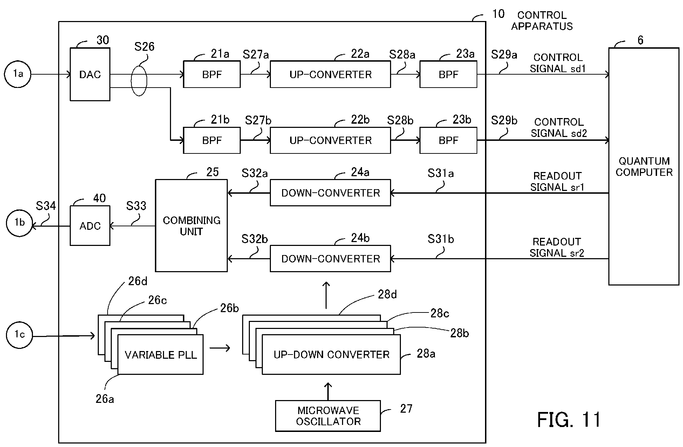

FIGS. 10 and 11 illustrate an example of an operation of generating control signals and processing readout signals.

### (Generation of Control Signals)

[Step S21] A control instruction for causing the quantum computer 6 to execute a quantum operation is transmitted from the host PC 5 to the quantum computer 6.

[Step S22] Upon receiving the control instruction via the interface unit 11, the control command generation unit 12 generates control commands and transmits the control commands to the control command storage unit 13.

[Step S23] The control command storage unit 13 stores the control commands in the memory unit 19.

[Step S24] The control command acquisition unit 14 reads out and acquires a plurality of control commands from the memory unit 19. For example, when five qubits are controlled by one set of cross-resonances, the control command acquisition unit 14 reads out control commands corresponding to their respective five qubits from the memory unit 19.

[Step S25] The control command acquisition unit 14 sets the plurality of readout control commands as a control command group corresponding to one set of cross-resonances, and converts the frequency bands of the plurality of control command groups into frequency bands, which are different from each other.

Then, the control command acquisition unit 14 performs frequency multiplexing on the plurality of control command groups (for example, frequency multiplexing on the control command groups, each of which corresponds to a corresponding one of the two sets of cross-resonances), and generates and outputs a digital multiplexed signal.

[Step S26] The DAC 30 performs D/A conversion on the digital multiplexed signal, to generate and output an analog multiplexed signal.

[Step S27a] The BPF 21a performs band-pass filtering of a predetermined band of the analog multiplexed signal, and extracts and outputs a control command signal for generating the control signal sd1 to be output from the control apparatus 10 (one of the control command groups obtained after the conversion into the analog signal).

[Step S27b] The BPF 21b performs band-pass filtering of a predetermined band of the analog multiplexed signal, and extracts and outputs a control command signal for generating the control signal sd2 to be output from the control apparatus 10 (the other one of the control command groups after the conversion into the analog signal).

[Step S28a] The up-converter 22a up-converts the control command signal, which has been output from the BPF 21a, to a microwave frequency band needed for processing in the quantum computer 6 based on the frequency signal, which has been output from the up-down converter 28a, and outputs the up-converted signal.

[Step S28b] The up-converter 22b up-converts the control command signal, which has been output from the BPF 21b, to a microwave frequency band needed for processing in the quantum computer 6 based on the frequency signal, which has been output from the up-down converter 28b, and outputs the up-converted signal. Both of the up-converters 22a and 22b perform up-conversion to a microwave frequency band in the same frequency band.

[Step S29a] The BPF23a performs band-pass filtering for removing frequency components such as noise outside the desired band from the output signal up-converted by the up-converter 22a, and outputs the filtered control signal sd1 to the quantum computer 6.

[Step S29b] The BPF23b performs band-pass filtering for removing frequency components such as noise outside the desired band from the output signal up-converted by the up-converter 22b, and outputs the filtered control signal sd2 to the quantum computer 6.

### (Processing of Readout Signals)

[Step S31a] The down-converter 24a receives the readout signal sr1 read out from the quantum computer 6.

[Step S31b] The down-converter 24b receives the readout signal sr2 read out from the quantum computer 6. The readout signals sr1 and sr2 have the same frequency band.

[Step S32a] Based on a frequency signal, which has been output from the up-down converter 28c, the down-converter 24a down-converts the readout signal sr1 to a frequency band processable by the ADC 40 in a subsequent stage, and outputs the down-converted readout signal.

[Step S32b] Based on a frequency signal, which has been output from the up-down converter 28d, the down-converter 24b down-converts the readout signal sr2 to a frequency band processable by the ADC 40 in a subsequent stage, and outputs the down-converted readout signal. The down-converters 24a and 24b perform down-conversion such that the frequencies of the readout signals after the down-conversion have different values.

[Step S33] The combining unit 25 combines the readout signal, which has been output from the down-converter 24a, and the readout signal, which has been output from the down-converter 24b, to generate and output an analog combined signal.

[Step S34] The ADC 40 performs A/D conversion on the analog combined signal, to generate and output a digital combined signal.

[Step S35] The readout data storage unit 15 extracts readout data (for example, two sets of 4-qubit readout data multiplexed) from the digital combined signal, and stores the readout data in the memory unit 19.

[Step S36] The readout data acquisition unit 16 acquires the readout data from the memory unit 19.

[Step S37] The readout data acquisition unit 16 transmits the acquired readout data to the readout data analysis unit 17.

[Step S38] The readout data analysis unit 17 analyzes the readout data and transmits the analysis result or the readout data to the interface unit 11.

[Step S39] Information such as the result of the quantum operation performed by the quantum computer 6 is transmitted from the control apparatus 10 to the host PC 5.

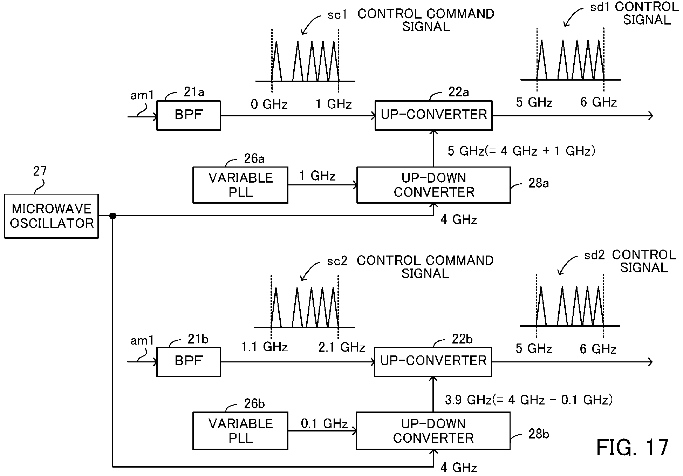

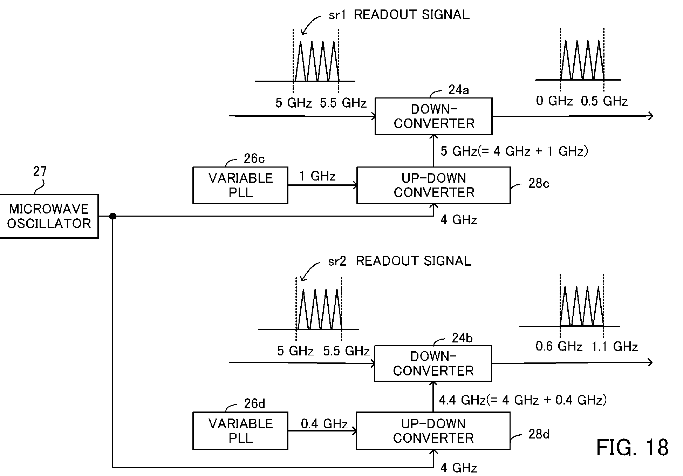

Detailed operations using the offset frequency control unit 18, the variable PLLs 26a to 26d, the microwave oscillator 27, and the up-down converters 28a to 28d will be described below with reference to FIGS. 17 and 18.

### <Frequency Conversion and Frequency Multiplexing>

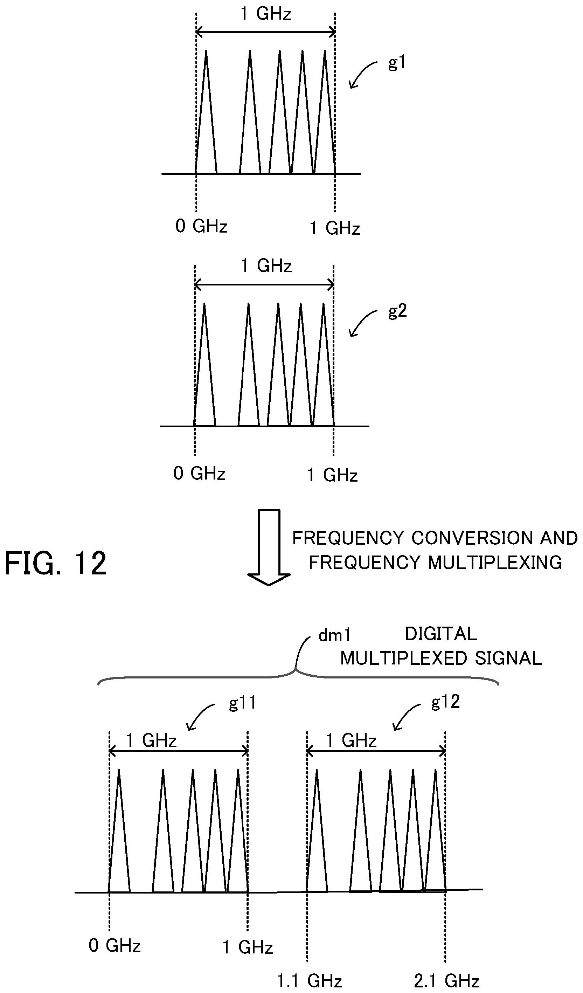

FIG. 12 illustrates an example of frequency conversion and frequency multiplexing. The control command acquisition unit 14 acquires a plurality of control commands of the same frequency from the memory unit 19, generates a plurality of control command groups, and performs frequency conversion by adding offsets to the frequency bands of the control command groups. After frequency conversion, digital frequency multiplexing is performed.

FIG. 12 assumes that a control command group including five control commands corresponding to five qubits is a set of cross-resonances, and a frequency band needed for the set of cross-resonances is 1 GHz. The control command acquisition unit 14 sets 0 GHz as the offset added to the control command group g1 of the first set of cross-resonances for generating the control signal sd1. The control command acquisition unit 14 sets the frequency band of the control command group g1 to 0 GHz to 1 GHz.

In addition, for example, the control command acquisition unit 14 sets an offset of 1.1 GHz starting from 0 GHz to the control command group g2 of the second set of cross-resonances for generating the control signal sd2. The control command acquisition unit 14 converts the frequency band of the control command group g2 to the frequency band from 1.1 GHz to 2.1 GHz.

By providing offsets such that the frequency bands are different from each other, the frequencies of the control commands included in the control command group g2 are converted into different values from the frequencies of the control commands included in the control command group g1.

Next, the control command acquisition unit 14 performs frequency multiplexing on the control command groups g11 and g12 obtained after the frequency conversion, to generate the digital multiplexed signal dm1. In this example, the control command groups g1 and g2 having a frequency band of 1 GHz are subjected to frequency conversion such that a frequency margin becomes 0.1 GHz and the control command groups g11 and g12 are generated. Next, the control command groups g11 and g12 are subjected to frequency multiplexing, to generate the digital multiplexed signal dm1.

As described above, by adding offsets to the frequency bands of a plurality of control command groups and performing frequency conversion such that the frequency bands are different from each other, frequency multiplexing of the plurality of control command groups, which are originally in the same frequency band, is enabled.

In the above description, in order to generate the two control signals sd1 and sd2, frequency conversion and frequency multiplexing have been performed on the control command groups of two sets of cross-resonances. However, when three or more control signals are generated, frequency conversion and frequency multiplexing are performed on the control command groups of three or more sets of cross-resonances.

For example, assuming that the operation performance of the DAC 30 located at a subsequent stage of the control command acquisition unit 14 has a bandwidth up to 5 GHz, the frequency band of the control command group of the first set of cross-resonances is set to 0 GHz to 1 GHz, and the frequency band of the control command group of the second set of cross-resonances is set to 1.1 GHz to 2.1 GHz by adding an offset.

In addition, the frequency band of the control command group of the third set of cross-resonances is set to 2.2 GHz to 3.2 GHz by adding an offset, and the frequency band of the control command group of the fourth set of cross-resonances is set to 3.3 GHz to 4.3 GHz by adding an offset. In this way, with one DAC having the operation performance of the 5 GHz bandwidth, it is possible to perform frequency conversion and frequency multiplexing that enable generation of four control signals.

### <Extraction and Up-Conversion of Control Command Signals>

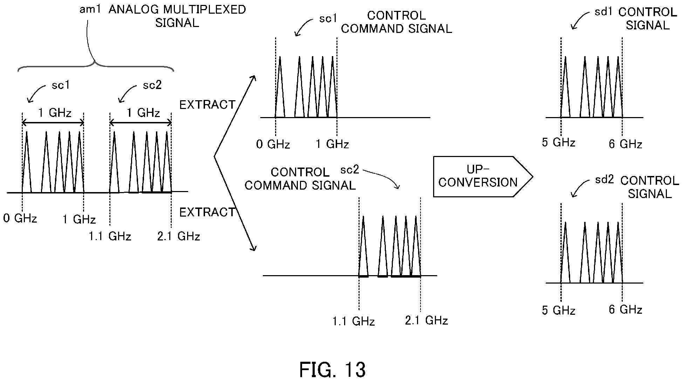

FIG. 13 illustrates an example of extraction and up-conversion of control command signals. The DAC 30 performs D/A conversion on a digital multiplexed signal dm1, which has been output from the control command acquisition unit 14, and outputs an analog multiplexed signal am1.

The BPF 21a extracts a control command signal sc1 from the analog multiplexed signal am1 by band-pass filtering, and the BPF 21b extracts a control command signal sc2 from the analog multiplexed signal am1 by band-pass filtering.

The control command signal sc1 is an analog signal obtained after D/A conversion of the control command group g11 in the frequency band from 0 GHz to 1 GHz, and the control command signal sc2 is an analog signal obtained after D/A conversion of the control command group g12 in the frequency band from 1.1 GHz to 2.1 GHz.

The up-converters 22a and 22b up-convert the control command signals sc1 and sc2, respectively, to a frequency band (microwave frequency band) needed for processing in which quantum computation is performed by the quantum computer 6, and generate and output control signals sd1 and sd2, respectively, in the same frequency band.

Here, if the frequency band of the microwaves is a frequency band F1, the frequency bands of the control signals sd1 and sd2 are up-converted to the frequency band F1. In this case, each of the up-converters 22a and 22b perform up-conversion using a frequency (F1-Δ) obtained by subtracting an offset Δ added when its corresponding control command group is frequency-converted from the frequency band F1 needed for its corresponding control signal sd1 or sd2 to be output.

For example, the frequency band F1 of the control signals sd1 and sd2 is 5 GHz to 6 GHz. Since the offset Δ of the control command signal sc1 of the first set is 0 GHz, the up-converter 22a up-converts the control command signal sc1 having a frequency band of 0 GHz to 1 GHz with 5 GHz (= 5 GHz - 0 GHz), to generate the control signal sd1 having a frequency band of 5 GHz to 6 GHz.

Since the offset Δ of the control command signal sc2 of the second set is 1.1 GHz, the up-converter 22b up-converts the control command signal sc2 having a frequency band of 1.1 GHz to 2.1 GHz with 3.9 GHz (= 5 GHz - 1.1 GHz), to generate the control signal sd2 having a frequency band of 5 GHz to 6 GHz. By performing the up-conversions with different frequencies in this manner, a plurality of control signals in the same frequency band are generated from one control apparatus 10.

### <Down-conversion and Combining>

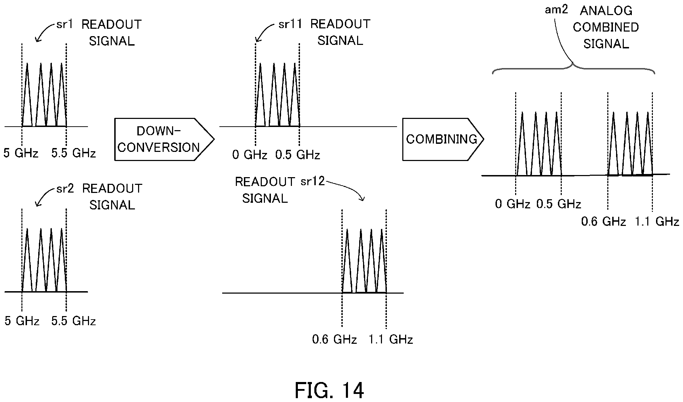

FIG. 14 illustrates an example of down-conversion and combining of readout signals. When the down-converters 24a and 24b receive readout signals sr1 and sr2 from the quantum computer 6, the down-converters 24a and 24b down-convert the readout signals sr1 and sr2 into different frequency bands that are readable by the ADC 40 in a subsequent stage.

The readout signals sr1 and sr2 are, for example, signals in which up to four qubits are multiplexed and which have been read out from the quantum computer 6, and the frequencies of the readout signals sr1 and sr2 are the same and fixed. For example, FIG. 14 assumes that the frequency band of the readout signals sr1 and sr2 is 5 GHz to 5.5 GHz.

Upon receiving the readout signal sr1 of the first set, the down-converter 24a performs down-conversion with 5 GHz, for example, to generate and output a readout signal sr11 in a frequency band from 0 GHz to 0.5 GHz.

The down-converter 24b generates and outputs a readout signal sr12 in a frequency band of 0.6 GHz to 1.1 GHz by performing down-conversion with 4.4 GHz (= 5 GHz - 0.5 GHz - 0.1 GHz) with a margin of 0.1 GHz, for example, such that the down-converted readout signal sr12 does not overlap the readout signal sr11 when combined.

Thereafter, the combining unit 25 combines the readout signal sr11 having the frequency band of 0 GHz to 0.5 GHz and the readout signal sr12 having the frequency band of 0.6 GHz to 1.1 GHz, to generate an analog combined signal am2.

### <Deviation Correction of Resonance Frequency of Control Commands>

In the control apparatus 10, frequency deviation of the resonance frequency of an individual qubit, which is a control command, is detected and corrected. When frequency deviation of the resonance frequency is detected, the digital processing circuit 10a of the control apparatus 10 generates a pilot control command and transmits the pilot control command to the quantum computer 6 via the analog processing circuit 10b. Next, the digital processing circuit 10a detects the deviation of the resonance frequency from a readout signal that is a reply to the pilot control command.

Since the design value of the resonance frequency is recognized in advance, it is possible to detect how much the frequency is deviated from the design value by observing an actually measured value of the resonance frequency of the readout signal during the operation of the quantum computer 6, the actually measured value being a reply to the transmitted pilot control command.

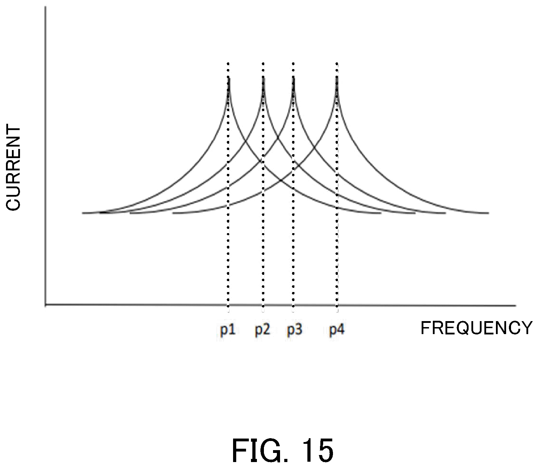

FIG. 15 illustrates an example of frequency deviation detection of the resonance frequency of an individual control command. The vertical axis represents the current, and the horizontal axis represents the frequency (resonance frequency) of a readout signal. FIG. 15 illustrates an example in which deviation of the resonance frequency is detected by using the fact that the resonance frequency of a resonator coupled to an individual qubit changes depending on the qubit state.

The frequency deviation of the resonance frequency is fed back to the control command acquisition unit 14 through the readout data analysis unit 17, for example, and the control command acquisition unit 14 corrects the frequency deviation, which will be described later.

Here, as design values, for example, the resonance frequencies of four qubits are set to 5, 5.1, 5.2, and 5.3 GHz every 100 MHz from 5 GHz. When these actual frequencies are measured, a pilot control command having a frequency around 5 GHz is transmitted, and a readout signal as a reply to the pilot control command is observed to measure the resonance frequency. For example, a resonance frequency of a resonator used for reading out a qubit is swept, an amplitude of reflection from the resonator is observed, and a deviation from a phase change point of the resonance frequency is measured.

In the example of FIG. 15, 4.998 GHz has been observed at a change point p1, and a frequency deviation of -2 MHz has been detected with respect to 5 GHz. At a change point p2, 5.080 GHz has been observed, and a frequency deviation of -20 MHz has been detected with respect to 5.1 GHz. At a change point p3, 5.190 GHz has been observed, and a frequency deviation of -10 MHz has been detected with respect to 5.2 GHz. At a change point p4, 5.215 GHz has been observed, and a frequency deviation of -85 MHz has been detected with respect to 5.3 GHz.

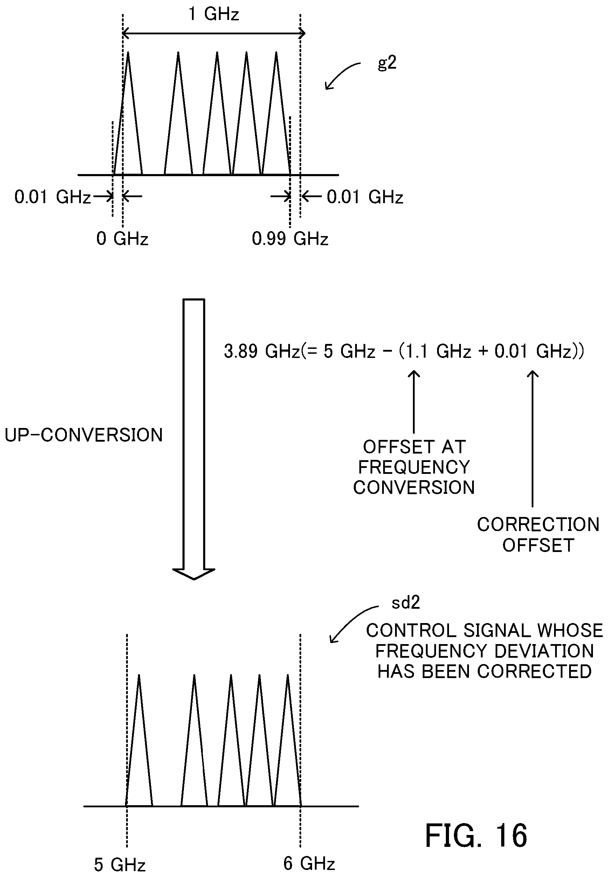

FIG. 16 illustrates an example of frequency deviation correction of the resonance frequency of an individual control command. The resonance frequency of an individual control command in a control command group may be deviated from its corresponding design value as described above. Therefore, the control command acquisition unit 14 corrects the frequency deviation at the time of generating the control command group by providing an offset corresponding to the frequency deviation of the resonance frequency of the corresponding qubit.

For example, when a qubit having a resonance point with a design value of 5 GHz is 5.01 GHz in actual measurement, an offset (correction offset) of 0.01 GHz is further added to the offset provided at the time of frequency multiplexing.

Assuming that, when the offset added at the time of frequency conversion is 1.1 GHz, there is a frequency deviation of 0.01 GHz on the negative side in the control command group g2. In this case, the offset is deviated by 0.01 GHz on the positive side and is set to 1.11 GHz.

When up-conversion is performed up to 5 GHz, up-conversion is performed with 3.89 GHz, which is a frequency obtained by subtracting 1.11 GHz from 5 GHz. That is, the up-converter 22b performs up-conversion with 3.9 GHz when there is no correction of the frequency deviation, and performs up-conversion with 3.89 GHz when the frequency deviation is corrected.

The frequency deviation correction is performed not for each set of control command groups but for each control command (qubit). Therefore, the correction offset is added to a resonance frequency having a frequency deviation.

As described above, when the correction on the negative side is needed, the correction offset is provided on the positive side as a whole, and the correction offset corresponding to the positive portion is reduced at the time of up-conversion. In this way, it is possible to correct the frequency deviation of the resonance frequency for each qubit.

As described above, regarding the qubits used in the quantum computer 6, the frequency deviation of the resonance frequency may occur at the time of manufacturing. However, by performing the control as described above, it is possible to accurately correct the frequency deviation of the resonance frequency.

### <Up-Conversion>

FIG. 17 illustrates an example of an up-conversion operation. The BPF 21a performs bandpass filtering of the frequency band from 0 GHz to 1 GHz on the analog multiplexed signal am1, and outputs the control command signal sc1 in the frequency band from 0 GHz to 1 GHz.

The BPF 21b performs bandpass filtering of the frequency band from 1.1 GHz to 2.1 GHz on the analog multiplexed signal am1, and outputs the control command signal sc2 in the frequency band from 1.1 GHz to 2.1 GHz.

The following description assumes that the up-converter 22a up-converts the frequency band of the control command signal sc1 to the frequency band from 5 GHz to 6 GHz, and that the up-converter 22b up-converts the frequency band of the control command signal sc2 to the frequency band from 5 GHz to 6 GHz. Therefore, a frequency signal of 5 GHz is input to the up-converter 22a, and a frequency signal of 3.9 GHz is input to the up-converter 22b.

The following description assumes that the microwave oscillator 27 outputs 4 GHz. For the control command signal sc1, a frequency signal of 5 GHz obtained by up-converting 4 GHz of the output of the microwave oscillator 27 by 1 GHz is input. In this case, based on a frequency setting instruction from the offset frequency control unit 18, the variable PLL 26a outputs 1 GHz, and the up-down converter 28a generates a frequency signal of 5 GHz by up-converting 4 GHz by 1 GHz.

On the other hand, for the control command signal sc2, a frequency signal of 3.9 GHz obtained by down-converting 4 GHz of the output of the microwave oscillator 27 by 0.1 GHz is input. In this case, based on a frequency setting instruction from the offset frequency control unit 18, the variable PLL 26b outputs 0.1 GHz, and the up-down converter 28b generates a frequency signal of 3.9 GHz by down-converting 4 GHz by 0.1 GHz.

### <Down-Conversion>

FIG. 18 illustrates an example of a down-conversion operation. The down-converter 24a receives a readout signal sr1 of the frequency band from 5 GHz to 5.5 GHz, and the down-converter 24b receives a readout signal sr2 of the frequency band from 5 GHz to 5.5 GHz.

The down-converter 24a down-converts the frequency band of the readout signal sr1 to a frequency band from 0 GHz to 0.5 GHz, and the down-converter 24b down-converts the frequency band of the readout signal sr2 to a frequency band from 0.6 GHz to 1.1 GHz.

Since both the readout signals sr1 and sr2 are in the frequency band of 5 GHz to 5.5 GHz, a frequency signal of 5 GHz is input to the down-converter 24a, and a frequency signal of 4.4 GHz is input to the down-converter 24b.

The following description assumes that the microwave oscillator 27 outputs 4 GHz. For the readout signal sr1, a frequency signal of 5 GHz obtained by up-converting 4 GHz of the output of the microwave oscillator 27 by 1 GHz is input. In this case, based on a frequency setting instruction from the offset frequency control unit 18, the variable PLL 26c outputs 1 GHz, and the up-down converter 28c generates a frequency signal of 5 GHz by up-converting 4 GHz by 1 GHz.

On the other hand, for the readout signal sr2, a frequency signal of 4.4 GHz obtained by up-converting 4 GHz of the output of the microwave oscillator 27 by 0.4 GHz is input. In this case, based on a frequency setting instruction from the offset frequency control unit 18, the variable PLL 26d outputs 0.4 GHz, and the up-down converter 28d generates a frequency signal of 4.4 GHz by up-converting 4 GHz by 0.4 GHz.

### (Modifications)

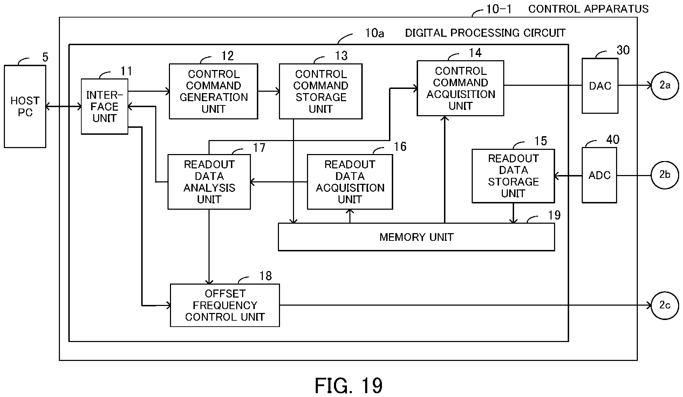

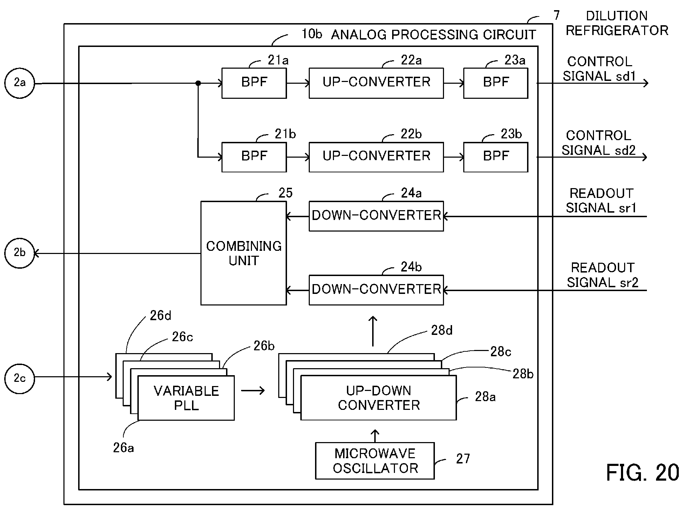

FIGS. 19 and 20 illustrate a modification of the control apparatus. A control apparatus 10-1 according to a modification includes the digital processing circuit 10a, the DAC 30, and the ADC 40. The analog processing circuit 10b described above with reference to FIG. 9 is disposed on the side of a dilution refrigerator 7 for cooling the quantum computer 6.

That is, the analog processing circuit 10b is disposed inside or outside the dilution refrigerator 7. The DAC 30 in the control apparatus 10-1 and the BPFs 21a and 21b disposed in the dilution refrigerator 7 are wired, and the offset frequency control unit 18 in the control apparatus 10-1 and the variable PLLs 26a to 26d are wired. The operation is the same as that of the control apparatus 10 described above.

As described above, the analog processing circuit 10b that processes signals, which have been output from the DAC 30, and processes signals, which are input to the ADC 40, is disposed on the dilution refrigerator 7 side. Accordingly, even when the number of control signals and the number of readout signals are increased, because communication is performed between the control apparatus 10-1 and the dilution refrigerator 7 using multiplexed signals, it is possible to reduce the number of signals (the number of wirings) between the control apparatus 10-1 and the dilution refrigerator 7 (the quantum computer 6).

Although the embodiment has been illustrated, the configuration of each unit described in the embodiment may be replaced with another configuration having the same function. In addition, any other components or processes may be added. Furthermore, any two or more configurations (features) of the above-described embodiment may be combined.

The foregoing merely illustrates the principles of the embodiment. Further, many modifications and variations are possible for those skilled in the art, and the present embodiment is not limited to the exact construction and application examples illustrated and described above, and all corresponding modifications and equivalents are deemed to be within the scope of the present embodiment as defined by the appended claims and their equivalents.

### Reference Signs List

10 Control apparatus
10a Digital processing circuit
30 digital-to-analog converter (DAC)
5 Host PC
6 Quantum computer
g1, g2 Control command group
g11, g12 Control command group after frequency conversion
dm1 Digital multiplex signal
am1 Analog multiplexed Signal
f1, f2 Frequency
f1+Δ, f2+Δ Frequency to which offset has been added

## Claims

1. A control apparatus comprising:
a digital processing circuit that
generates a first control command group including a plurality of first control commands for controlling a plurality of first qubits, and a second control command group including a plurality of second control commands for controlling a plurality of second qubits, each of the second control commands having a same frequency as a frequency of a corresponding one of the first control commands, and
performs frequency-multiplexing on a third control command group having a first frequency band obtained by adding a first offset to a frequency band of the first control command group and a fourth control command group having a second frequency band, which is obtained by adding a second offset to a frequency band of the second control command group and which is different from the first frequency band, to generate a digital multiplexed signal; and
a digital-to-analog converter that performs digital-to-analog conversion on the digital multiplexed signal, to generate an analog multiplexed signal.

2. The control apparatus according to claim 1, further comprising:
a first analog processing circuit that
extracts a first control command signal having the first frequency band from the analog multiplexed signal, and extracts a second control command signal having the second frequency band from the analog multiplexed signal,
generates a first control signal by modulating the first frequency band of the first control command signal to a third frequency band, and generates a second control signal by modulating the second frequency band of the second control command signal to the third frequency band, and
outputs the first control signal and the second control signal in the same frequency band.

3. The control apparatus according to claim 2, further comprising:
a second analog processing circuit that
acquires a first readout signal having a fourth frequency band from a plurality of third qubits, and acquires a second readout signal having the fourth frequency band from a plurality of fourth qubits,
demodulates the fourth frequency band to a fifth frequency band to generate a third readout signal, and demodulates the fourth frequency band to a sixth frequency band, which is different from the fifth frequency band, to generate a fourth readout signal, and
combines the third readout signal and the fourth readout signal to generate an analog combined signal; and
an analog-to-digital converter that performs analog-to-digital conversion on the analog combined signal, to generate a digital combined signal.

4. The control apparatus according to claim 1, further comprising an analog-to-digital converter, wherein
the control apparatus is connected to an analog processing circuit located at a dilution refrigerator for cooling a quantum computer,
the analog processing circuit includes
a first analog processing circuit that
extracts a first control command signal having the first frequency band from the analog multiplexed signal, and extracts a second control command signal having the second frequency band from the analog multiplexed signal, and
generates a first control signal by modulating the first frequency band of the first control command signal to a third frequency band, and generates a second control signal by modulating the second frequency band of the second control command signal to the fifth frequency band, and
outputs the first control signal and the second control signal in the same frequency band to the quantum computer, and
a second analog processing circuit that
acquires a first readout signal having a fourth frequency band from a plurality of third qubits from the quantum computer, and acquires a second readout signal having the fourth frequency band from a plurality of fourth qubits from the quantum computer,
demodulates the fourth frequency band to a fifth frequency band to generate a third readout signal, and demodulates the fourth frequency band to a sixth frequency band different from the fifth frequency band, to generate a fourth readout signal, and
combines the third readout signal and the fourth readout signal, to generate an analog combined signal, and
the analog-to-digital converter performs analog-to-digital conversion on the analog combined signal, which has been output from the analog processing circuit, to generate a digital combined signal.

5. The control apparatus according to claim 2 or 4, wherein
the first analog processing circuit
generates the first control signal by modulating the first frequency band with a frequency obtained by subtracting the first offset from a value of the third frequency band, and
generates the second control signal by modulating the second frequency band with a frequency obtained by subtracting the second offset from the value of the third frequency band.

6. The control apparatus according to claim 5, wherein
when a first frequency deviation deviating from a design value is included in a first resonance frequency of the first control commands included in the first control command group, the digital processing circuit generates a first digital control command by adding the first offset and a first correction offset for correcting the first frequency deviation to the first resonance frequency,
the first analog processing circuit modulates the first resonance frequency with a frequency obtained by subtracting the first offset and the first correction offset from a frequency of a first analog control command signal obtained after the first digital control command is subjected to digital-to-analog conversion by the digital-to-analog converter, to generate the first control signal in which the first frequency deviation has been corrected,
when a second frequency deviation deviating from the design value is included in a second resonance frequency of the second control commands included in the second control command group, the digital processing circuit generates a second digital control command by adding the second offset and a second correction offset for correcting the second frequency deviation to the second resonance frequency, and
the first analog processing circuit modulates the second resonance frequency with a frequency obtained by subtracting the second offset and the second correction offset from a frequency of a second analog control command signal obtained after the second digital control command is subjected to digital-to-analog conversion by the digital-to-analog converter, to generate the second control signal in which the second frequency deviation has been corrected.

7. The control apparatus according to claim 6, wherein the digital processing circuit generates a pilot control command directed to a quantum computer, observes an actual measurement value of a resonance frequency from a reply readout signal, which is a reply to the pilot control command, during operation of the quantum computer, and detects a frequency deviation of the resonance frequency from the design value.

8. A control apparatus comprising:
an analog processing circuit that
acquires a first readout signal having a first frequency band from a plurality of first qubits, and acquires a second readout signal having the first frequency band from a plurality of second qubits,
demodulates the first frequency band to a second frequency band to generate a third readout signal, and demodulates the first frequency band to a third frequency band, which is different from the second frequency band, to generate a fourth readout signal, and
combines the third readout signal and the fourth readout signal, to generate an analog combined signal; and
an analog-to-digital converter that performs analog-to-digital conversion on the analog combined signal, to generate a digital combined signal.

9. A control method comprising:
generating, by a digital processing circuit implemented in a control apparatus, a first control command group including a plurality of first control commands for controlling a plurality of first qubits, and a second control command group including a plurality of second control commands for controlling a plurality of second qubits, each of the second control commands having a same frequency as a frequency of a corresponding one of the first control commands;
performing, by the digital processing circuit, frequency-multiplexing on a third control command group having a first frequency band obtained by adding a first offset to a frequency band of the first control command group and a fourth control command group having a second frequency band, which is obtained by adding a second offset to a frequency band of the second control command group and which is different from the first frequency band, to generate a digital multiplexed signal; and
performing, by a digital-to-analog converter implemented in the control apparatus, digital-to-analog conversion on the digital multiplexed signal, to generate an analog multiplexed signal.

10. A control method comprising:
acquiring, by an analog processing circuit implemented in a control apparatus, a first readout signal having a first frequency band from a plurality of first qubits, and acquiring a second readout signal having the first frequency band from a plurality of second qubits;
demodulating, by the analog processing circuit, the first frequency band to a second frequency band to generate a third readout signal, and demodulating the first frequency band to a third frequency band, which is different from the second frequency band, to generate a fourth readout signal; and
combining, by the analog processing circuit, the third readout signal and the fourth readout signal, to generate an analog combined signal; and
performing, by an analog-to-digital converter implemented in the control apparatus, analog-to-digital conversion on the analog combined signal, to generate a digital combined signal.
